## Europäisches Patentamt

## European Patent Office

## Office européen des brevets

(11) Publication number: **0 106 610**
**B1**

(12) **EUROPEAN PATENT SPECIFICATION**

(45) Date of publication of patent specification: **27.08.86**

(21) Application number: **83305947.0**

(22) Date of filing: **03.10.83**

(51) Int. Cl.⁴: **B 60 J 7/04**

(54) Sliding roof for motor vehicles.

(30) Priority: **19.10.82 GB 8229859**

(43) Date of publication of application:
**25.04.84 Bulletin 84/17**

(45) Publication of the grant of the patent:
**27.08.86 Bulletin 86/35**

(84) Designated Contracting States:
**DE FR GB**

(56) References cited:
**DE-C-2 731 408**
**GB-A-1 523 538**

(73) Proprietor: **Britax Weathershields Limited**
**180 Sherlock Street**
**Birmingham B5 7EH (GB)**

(72) Inventor: **Simpson, Victor**
**92 Margaret Avenue Bedworth**
**Nuneaton Warwickshire CV12 8ED (GB)**
Inventor: **Pollard, John William**
**601 Bordesley Green Road**
**Birmingham 9 West Midlands (GB)**

(74) Representative: **Hollinghurst, Antony**
**Britax Limited Patent Department Kingsham Road**
**Chichester West Sussex PO19 2UG (GB)**

Courier Press, Leamington Spa, England.

## Description

This invention relates to a sliding roof for a motor vehicle of the type having a rigid panel closing an opening in the vehicle roof and which can be opened either by sliding the panel rearwardly below the vehicle roof behind the opening or by pivoting the panel upwardly about a transverse horizontal axis adjacent to its front edge so that the rear edge of the panel is above the vehicle roof.

A sliding roof of this kind is disclosed in Patent Specification GB—A—1523538 (and according to the precharacterizing portion of claim 1), but the mechanism disclosed therein involves a complex arrangement of slide guides and cam followers. The present invention is concerned with the provision of a simple mechanism for an opening roof of this type.

According to the invention, a sliding roof assembly for a motor vehicle comprises a rigid roof panel which is supported at each side by front and rear guide means on respective guide tracks extending along each side of an opening in the vehicle roof and continuing below the vehicle roof behind said opening, together with drive means operative on the rear guide means, the front guide means being adapted to permit pivotal movement of the panel about a horizontal axis at right angles to the guide tracks and each rear guide means comprising a rear shoe and lift means, the rear shoe being slidably received in the corresponding guide track and connected to the corresponding front guide means by spacer means arranged to retain the rear shoe at a predetermined distance behind the front guide means, and the lift means comprising a pair of semi-flexible strip elements, each of which has one end secured to the underside of the panel and the other end projecting into a respective longitudinally extending channel formed in the corresponding rear shoe, one of said channels extending forwardly and the other extending rearwardly, the end of the strip element in the rearwardly extending channel being connected to the drive means and the flexibility of the strip elements being such that, when the drive means carries forward movement of the rearwardly extending strip element with the rear shoes restrained against forward movement, both strip elements of both rear support means move upwardly from their respective channels, thereby lifting the rear edge of the roof panel.

Preferably the strip elements of each rear support means, together with a base member by which they are connected to the roof panel, are formed as a single plastics moulding.

The drive means may comprise plastic tape having a row of rectangular slots formed along its length. Each of the rearwardly extending strip elements is then provided with projections to engage in corresponding slots adjacent to the ends of respective lengths of such tape. The lengths of tape extend along the guide rails towards the rear of the vehicle roof where they are coupled to one or more driving sprockets.

Each of the front guide means may comprise a single plastics moulding having a hinge section integrally formed therein. On one side of the hinge section, the moulding takes the form of a shoe for sliding in the corresponding guide rail while, on the other side of the hinge formation, the moulding comprises a base member by which it is connected to the roof panel.

Embodiments of the invention will now be described, by way of example, with reference to the accompanying drawings in which:

Figure 1, is a fragmentary perspective sectional view of a motor car fitted with a sliding roof assembly of the type to which the invention relates, showing the roof panel in its closed position and in each of its two alternative open positions;

Figure 2 is a longitudinal sectional view showing the roof panel in its closed position;

Figure 3 is a partially broken away side view of one of the rear guide means for the roof shown in Figure 2, in its fully lowered position;

Figure 4 is a cross-sectional view, similar to Figure 3, but showing the guide means in its fully raised position;

Figure 5 is a cross-sectional view taken on the line 5—5 in Figure 2;

Figure 6 is a cross-sectional view taken on the line 6—6 in Figure 5;

Figure 7 is a longitudinal sectional view of the front end of a sliding roof assembly in accordance with a second embodiment of the invention with the panel in the closed position;

Figure 8 is a cross-sectional view, similar to Figure 7, showing the panel shortly after commencement of sliding below the vehicle roof;

Figure 9 is a longitudinal sectional view of the rear of the roof assembly in accordance with the second embodiment of the invention showing the mechanism in its closed position;

Figure 10 is a cross-sectional view similar to Figure 9 but showing the mechanism in the position which it occupies when the panel is raised; and

Figure 11 is a sectional view, similar to Figures 9 and 10 but showing the mechanism in the position it takes up when the panel is lowered prior to sliding below the vehicle roof.

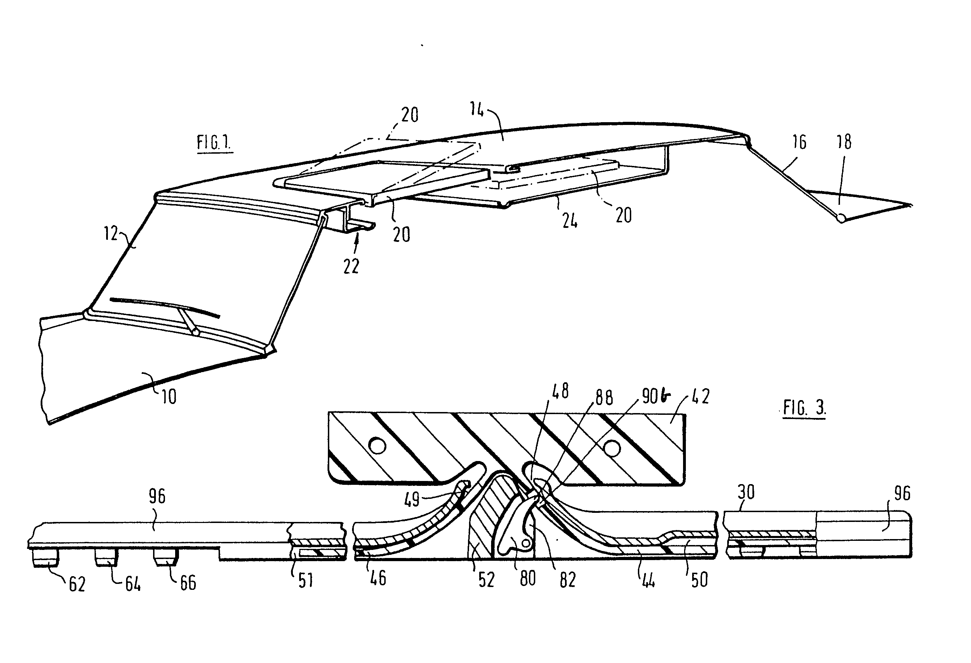

Figure 1 shows the upper part of the body of a saloon motor car comprising a bonnet 10, a windscreen 12, a roof 14, a rear window 16 and a boot 18. A moveable glass roof panel 20 is located in a frame 22 bounding an opening in the vehicle roof 14. The frame 22 includes a drain tray 24 forming the bottom of a chamber into which the roof panel 20 can be slid below the vehicle roof 14.

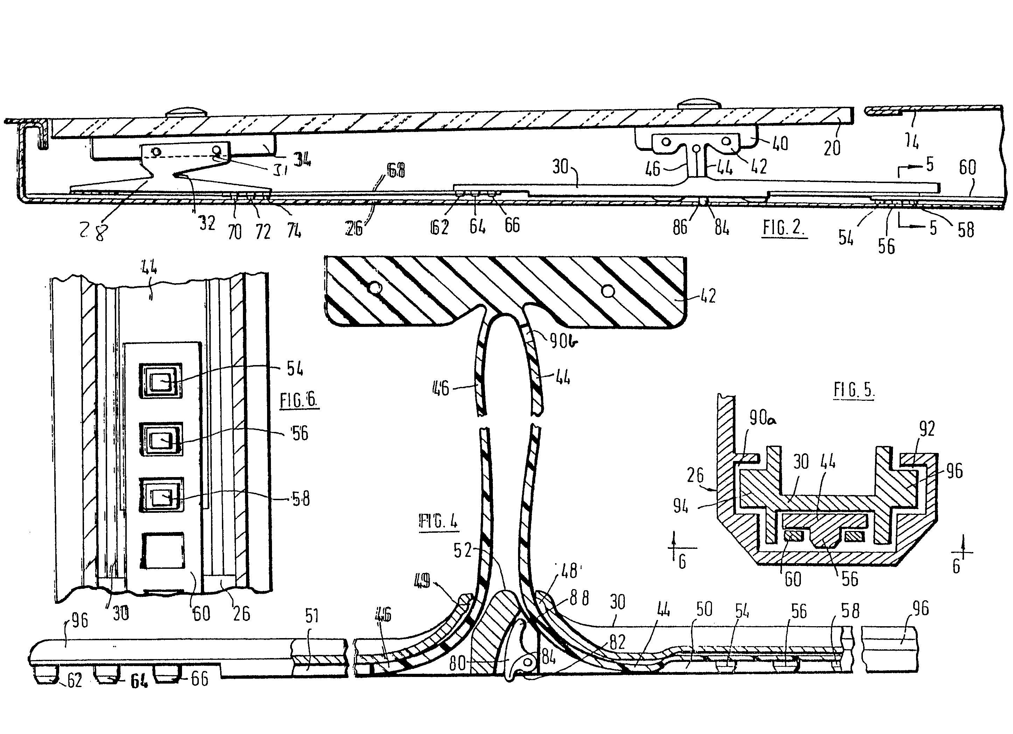

A respective guide rail, on which the panel 20 is slidable, extends along each side of the opening in the vehicle roof 14 and into the space above the drain tray 24. Figure 2 shows the front part of the rail 26 on the car driver's right-hand side of the opening in the vehicle roof 14. The guide rail 26 supports a front shoe 28 and a rear shoe 30. The front shoe 28 is formed as a plastics moulding, integrally with a base member 31 to which it is connected by an integral hinge section 32. The base member 31 is secured to a block 34 which is fastened to the underside of the panel 20 near the front edge thereof.

Another block 40 is secured to the underside of the panel 20 above the shoe 30. A plastics base member 42, integrally moulded with two strip elements 44 and 46, is secured to the block 40 with the strip elements 44 and 46 projecting downwardly through a slot in the top of the rear shoe 30. As can best be seen from Figures 3 and 4, the opening in the top of the shoe 30 has two branches 48 and 49 separated by a guide formation 52. As can be seen from Figure 5, the cross-section of the shoe 30 to the right of the central slot is generally H-shaped. The cross-section of the left-hand part is of similar shape. The guide channel 48 leads the strip element 44 into a channel 50 formed below the cross-bar of the H-shape at the right-hand or rear end of the shoe 30 while the channel 49 leads the strip element 46 into a similar channel 51 formed under the cross-bar of the left-hand or front end thereof. The free end of the strip element 44 carries three downwardly projecting teeth 54, 56 and 58 which engage in the end three slots of a length of slotted plastic tape 60. The length of tape 60 extends to the rear end of the guide rail 26 where it is engaged by a sprocket driven by an electric motor (not shown).

The free end of the other strip element 46 is merely free to slide in the channel 51 under the front part of the rear shoe 30, not being in driving connection with any other element. However, the front part of the shoe 30 itself carries three downwardly projecting teeth 62, 64 and 66 which engage with the rear three slots in another length of slotted tape 68, the front three slots of which are engaged by three teeth 70, 72 and 74 at the rear of the front shoe 28 (Figure 2). Thus, the front and rear shoes 28 and 30 are held at a fixed distance from each other.

Referring again to Figures 3 and 4, a double-ended pawl 80 is pivotally mounted in a slot 82 formed in the central guide formation 52 of the rear shoe 30. One end 64 of the pawl 80 can engage in a slot 86 in the bottom of the guide rail 26 when the rear shoe 30 is in its furthest forward position (Figure 4). The other end 88 of the pawl 80 can engage in a hole 90b in the strip element 44 when the base member 42 is in its lowest position, as illustrated in Figure 3. The dimensions of the pawl 80 are such that the end 88 can disengage from the hole 90b only when the other end is engaged in the slot 86 and *vice versa*.

The operation of the sliding roof assembly is as follows. Figure 2 shows the panel 20 in the closed position, level with the vehicle roof 14. Since the base member 42 is above its lowest position illustrated in Figure 3, the hole 90 in the strip element 44 is not aligned with the pawl end 88 and consequently the pawl 80 is held in the position illustrated in Figure 4, with the pawl end 84 engaged in the slot 86 in the bottom of the rail 26.

When the roof is to be opened by pivoting it about the hinge 32 of the front shoe 28, the slotted tape 60 is driven forwardly, forcing the strip element 44 upwardly through the guide channel 48, thereby raising the base member 42, and, with it, the rear edge of the panel 20. The other strip element 46 which, of course, also moves upwardly, resists any tendency of the strip element 44 to form a forwardly extending bow as it emerges from the channel 48 rather than lifting the panel 20. The panel 20 is closed by driving the tape 60 back to its original position.

When the roof is to be opened by sliding the panel 20 into the space above the drain tray 24, the tape 60 is driven backwardly along the guide rail 26. Initially, this results in the strip element 44 being drawn into the channel 48 to its maximum extent to lower the rear edge of the panel 20 below the vehicle roof 14. As this movement is completed, the hole 90 moves into alignment with the pawl end 88, freeing the pawl 80 to pivot in a clockwise direction so as to disengage its end 84 from the slot 86 in the rail 26, as shown in Figure 3. The rear shoe 30 is now free to slide rearwardly along the rail 26, the front shoe 28 being pulled along by the tape 68. As can be seen from Figure 2, the guide rail 26 slopes downwardly from the front of the vehicle so that, by the time the front shoe 28 reches the rear of the roof opening, the front part of the panel 20 is below the level of the vehicle roof 14.

When the roof is to be closed, the tape 60 is driven forwardly, the rear shoe 30 sliding back to its original position, whereupon the pawl 80 pivots back into the slot 86, releasing the strip element 44 so as to allow the panel 20 to be raised back to its original position level with the vehicle roof, as shown in Figure 2.

Thus, the pawl 80 serves on the one hand to prevent the rear shoe 30 from moving backwardly along the rail 26 until the rear edge of the panel 20 is below the vehicle roof 14, and on the other hand to prevent the panel 20 from being raised relative to the rear shoe 30 until it is in alignment with the roof opening.

In order to prevent the rear shoe 30 from being lifted out of engagement with the guide rail 26, the latter is formed with grooves 90a and 92 in its side walls. Projections 94 and 96 extend along the entire length of the rear shoe 30 and engage in these channels 90a and 92. It will be noticed from Figures 3 and 4 that the front part of the shoe 30 does not extend above the top of the projections 94 and 96. This is because the channel 51 has to accommodate the strip element 46 while the channel 50 has to accommodate both the strip element 44 and the slotted tape 60.

Instead of interconnecting the front and rear shoes 28 and 30 by the length of the tape 68, these two shoes may be formed as a single plastics moulding.

As an alternative to forming the pawl 80 as a separate component from the guide formation 52, these two components may be formed as one moulding with an integral plastics hinge.

Although it is preferable for the projections 94 and 96 to extend along the entire length of the rear shoe 30, satisfactory results can be achieved with these projections formed only on the part of the shoe 30 forward of the position of maximum forward travel of the slotted tape 60.·

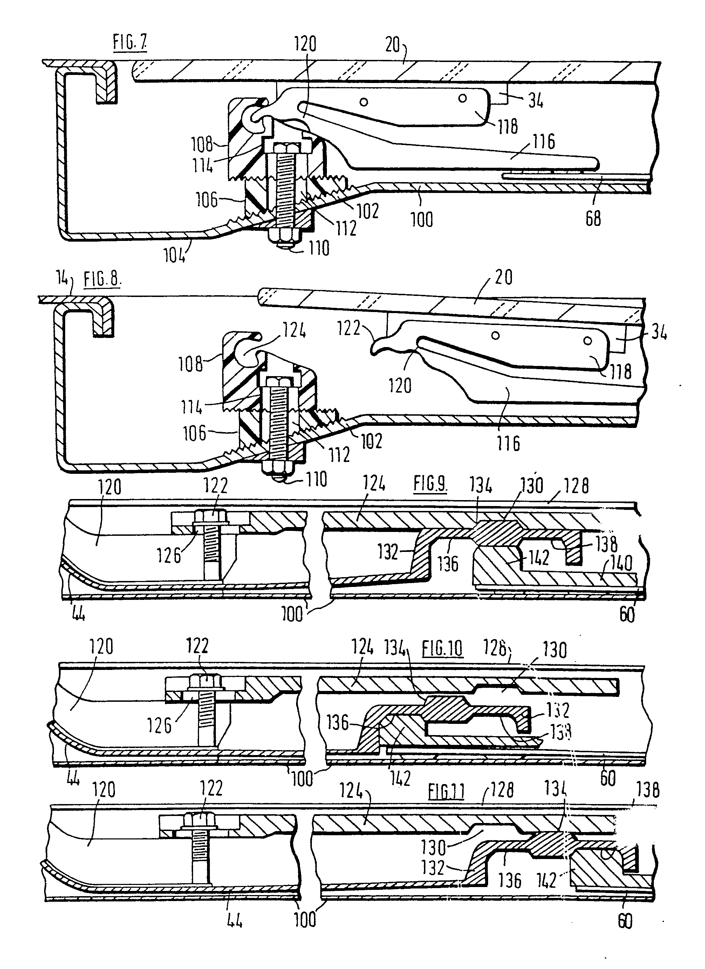

Figures 7 to 11 illustrate a second embodiment of the invention in which provision is made for independently adjusting the front edge and the rear edge of the panel 20 when in its closed position so as to align it accurately with the level of the vehicle roof 14. Referring first to Figures 7 and 8, the guide rail 100 on the right-hand side of the opening in the vehicle roof 14 has a ramp 102 at its front end which leads down to a deeper channel 104 extending across the front of the roof opening. The upper surface of the ramp 102 is serrated and supports a plastics wedge 106 which has serrations on both its upper and lower surfaces. Supported on the upper surface of the wedge 106 is a support block 108 which has serrations on its lower surface for engagement with the serrations of the wedge 106. The components 106 and 108 are secured to the ramp 102 by a bolt 110 which extends through slots 112 and 114 in the wedge 106 and support block 108 respectively. Thus, variations of the position of the wedge 106 relative to the ramp 112 adjusts the height of the support block 108 while variation of the position of the support block 108 relative to the wedge 106 adjusts the longitudinal position of the former.

The front shoe 116 is formed as integral plastics moulding with a base member 118 which is secured to the block 34 on the underside of the panel 20 as in the embodiment illustrated in Figures 1 to 6. As before, the connection between the shoe 116 and the base member 118 is an integral hinge section 120. However, on its front end, the base member 118 carries a hook formation 122 which engages in a complementary recess 124 in the support block 108. The relative configuration of the hook formation 122 and the recess 124 is such that the latter can be withdrawn from the former only when the panel 20 is inclined at a sufficient angle for the rear edge thereof to be below the level of the vehicle roof.

The front shoe 116 is connected to the front end of tape 68 as before.

Turning now to Figures 9, 10 and 11, the rear shoe 30 of Figures 1 to 6 is replaced by a rear shoe 120, only the rear end of which is illustrated. The rest of the shoe 120 is the same as the shoe 30 except that it does not have provision for accommodating a pawl similar to the pawl 80. However, at its rear end the shoe 120 is connected by means of a bolt 122 to a coupling member 124, the bolt 122 extending through a slot 126 in the latter so as to enable the relative longitudinal positions of the coupling member 124 and the shoe 120 to be adjusted. Upward movement of the coupling member 124 is restricted by a flange 128 on the upper part of the rail 100 and a complementary flange (not shown) on the other side thereof which extend inwardly towards one another leaving sufficient gap for the strip elements 44 and 46 (see also Figures 3 and 4) to project therebetween.

The coupling member 124 has a recess 130 near the rear of its lower surface, the front and rear edges of the recess being sloping. The rear end of the strip element 44 carries a moulding 132 which has a projection 134 on its upper surface shaped to fill the recess 130. On its lower surface, the member 132 has two recesses 136 and 138, both with sloping front and rear edges and one located in front of and the other behind the projection 134. The drive tape 60 is coupled to a drive member 140 which has a projection 142 which is shaped to be engageable in either of the recesses 136 and 138. The height of the projection 142 is chosen in relation to the distance between the flange 128 and the bottom of the track 100 so that it can move between the two recesses 136 and 138 only when the projection 134 is received in the recess 130, as illustrated in Figure 9 and not when it is displaced therefrom, as illustrated in Figures 10 and 11.

The operation of the embodiment illustrated in Figures 7 to 11 is as follows. When the panel 20 is positioned to close the opening in the vehicle roof 14 (i.e. in the position shown in solid lines in Figure 1, the front shoe 116 is in the position shown in Figure 7 and the rear shoe 120 in the position shown in Figure 9. If the panel 20 is to be opened by pivoting its rear edge upwardly, the drive tape 160 is arranged to move the drive member 140 forwardly to the position shown in Figure 10 in which the projection 142 is received in the recess 136. The projection 134 can now move out of the recess 130, allowing the member 136 to move the strip element 44 forwardly relative to the shoe 120, as illustrated in Figure 10, thereby lifting the rear edge of the panel 20. At the front of the panel 20, the hook formation 122 pivots in the recess 124 in the mounting block 108. The panel 20 can then be lowered to its original position by reversing the movement of the tape 60.

When the panel 20 is to slide under the vehicle roof 14, the drive tape 60 is moved rearwardly, moving the projection 142 into the recess 138 and thus allowing the projection 134 to move out of the recess 130. The member 132 is then moved rearwardly relative to the coupling member 124 and the rear shoe 120, drawing the strip element 44 rearwardly so as to lower the rear edge of the panel 20. When this lowering movement is complete, further rearward movement of the drive tape 60 moves the complete assembly comprising the rear shoe 120, the coupling member 124 and the drive member 142 rearwardly, and with it, the panel 20. The panel 20 can be moved back to its closed position by driving the tape 60 forwardly until the projection 134 is again received in the recess 130. A projection (not shown) on the block 40 engages under a flange (not shown) on the track 28 to prevent the panel from being raised from its lowered position when it is to the rear of the opening in the vehicle roof 14.

When the panel 20 is in its closed position, it can be centred between the front and rear edges of the opening in the vehicle roof by adjusting the position of the support member 108 on the wedge 106, after slackening the bolts 110. The height of the front edge of the panel 20 can be accurately aligned with the front edge of the roof opening by adjusting the position of the wedge 106 on the ramp 102 at the same time. The height of the rear edge of the panel 20 can be accurately aligned with the level of the vehicle roof 14 by slackening the bolt 122 so as to adjust the position of the coupling member 124 relative to the rear shoe 120.

It will be appreciated that in both embodiments, a similar guide rail, front and rear shoes and associated components are provided to support the panel 20 on the other side of the roof opening and that their manner of operation is similar. The tape corresponding to the tape 60 on the other side of the roof opening may be driven by a separate electric motor. Alternatively, a shaft, having one pinion for each tape may extend across the back of the drain tray 24 to enable both tapes to be driven from a single motor. As a further alternative, the tape 60, and the corresponding tape on the other side of the roof may be guided across the back of the drain tray 24 so as to engage with opposite sides of a single centrally mounted pinion by an electric motor located at the centre of the back of the drain tray.

When the invention is to be applied to a manually openable roof, it will usually be preferable for the drive to be located at the front of the roof opening. In this case, the plastic tape 60 is replaced by means for coupling the strip element 44 to a drive system located in a groove in the guide rail 26 below the tape 68.

Although the invention has been described as applied to an opening roof with a glass panel, it is obviously of equal application to an opening roof with a rigid panel formed of other materials such as steel.

**Claims**

1. A sliding roof assembly for a motor vehicle comprising a rigid roof panel (20) which is supported at each side by front and rear guide means (28, 30) on respective guide tracks (26) extending along each side of an opening in the vehicle roof (14) and continuing below the vehicle roof (14) behind said opening, together with drive means (60) operative on the rear guide means, the front guide means (28) being adapted to permit pivotal movement of the panel about a horizontal axis at right-angles to the guide tracks (26) and each rear guide means comprising a rear guide shoe (30) and lift means (42), the rear shoe (30) being slidably received in the corresponding guide track (26), characterised in that each rear shoe (30) is connected to the corresponding front guide means (28) by spacer means (68) arranged to retain such rear shoe (30) at a predetermined distance behind the front guide means (28), and each lift means (42) comprises a pair of semi-flexible strip elements (44, 46), each of which has one end secured to the underside of the panel (20) and the other end projecting into a respective longitudinally extending channel (50, 51) formed in the rear shoe (30), one of said channels (51) extending forwardly and the other (50) extending rearwardly, the end of the strip element (44) in the rearwardly extending channel (50) being connected to the drive means (60) and the flexibility of the strip elements (44, 46) being such that, when the drive means (60) causes forward movement of each rearwardly extending strip element (44) with the rear shoes (30) restrained against forward movement, both strip elements (44, 46) of both rear guide means (30) move upwardly from their respective channels (26), thereby lifting the rear edge of the roof panel (20).

2. A roof assembly according to claim 1, characterised in that the strip elements (44, 46) of each rear guide means are formed as a single plastics moulding.

3. A roof assembly according to claim 1 or 2, characterised by means (84, 122) for inhibiting movement of the rear shoe (30) when the panel (20) is raised above its lowest position and means (88) for inhibiting raising of the panel (20) from its lowest position when the rear shoes (30) are behind their foremost position.

4. A roof assembly according to claim 3, characterised in that said means for inhibiting movement of the rear shoe (30) and the panel (20) comprise respective pawl ends (84 and 88) of a pawl (80) which is pivotally moulded on the rear shoe (30) so as to engage with an opening in one of the strip elements (44, 46) when in a first position and to engage in an opening in the track (26) when in a second position.

5. A roof assembly according to any preceding claim, characterised in that the drive means comprises a plastics tape (60) for each guide track (26), each plastics tape having a row of rectangular slots formed along its length and each of the rearwardly extending strip elements (44) being provided with projections (54, 56, 58) to engage in corresponding slots adjacent to the end of each tape (60).

6. A roof assembly according to claim 3, characterised in that the means for inhibiting movement of the rear shoe when the panel (20) is raised comprises a hook-like formation (122) carried by the front shoe (116) and arranged to engage with a member (108) secured to the track (110), the mutually engaging surface of the formation (122) and the member (108) being so arranged that the formation (122) can be disengaged only when the rear edge of the panel (20) is in its fully lowered position.

7. A roof assembly according to claim 6, characterised in that the member (108) is secured to the track (110) by mounting means permitting adjustment of its position along the track and its height relative thereto so as to allow adjustment of the height and longitudinal position of the front edge of the panel (20) when in its closed position.

8. A roof assembly according to claim 6 or 7, characterised in that the rear end of each rear shoe (128) is connected to respective coupling member (124) by means permitting adjustment of their relative positions, the rear end of the rearwardly extending strip (44) has two spaced recesses (136 and 138) on one surface and a projection (134) on its opposite surface aligned with the projection boundary between the recesses (136 and 138), and the drive means (60) has a projection (142) which is engageable in either of the recesses (136 and 138) so as to be drivingly coupled to the strip element (44) but is movable between the two recesses (136 and 138) only when the projection (134) is received in a recess (130) in the coupling member (124), the recess (130) thereby defining a position of the strip element (44) relative to the rear shoe (120) in which the drive means (60) is capable of limited movement without causing an equivalent movement of the panel (20).

**Patentansprüche**

1. Schiebedachanordnung für ein Kraftfahrzeug, umfassend eine steife Dachplatte (20, die an jeder Seite über vordere und hintere Führungsmittel (28, 30) an entsprechenden Führungsschienen (26) gelagert ist, die sich entlang einer jeden Seite einer Öffnung im Kraftfahrzeugdach (14) erstrecken und bis unter das Kraftfahrzeugdach (14) hinter der Öffnung zusammen mit Antriebsmitteln (60) führen, die mit den hinteren Führungsmitteln in Wirkverbindung stehen, wobei die vorderen Führungsmittel (28) so ausgestaltet sind, daß sie eine Schwenkbewegung des Daches um eine horizontale Achse im rechten Winkel zu den Führungsschienen (26) erlauben und wobei alle hinteren Führungsmittel einen Hinterschuh (50) zum Führen und Hebemittel (42) umfassen, wobei der Hinterschuh (30) gleitverschiebbar in der entsprechenden Führungsschiene (26) aufgenommen ist, dadurch gekennzeichnet, daß jeder Hinterschuh (30) über Abstandshaltemittel (68) mit den entsprechenden vorderen Führungsmitteln (28) verbunden ist, die derart angeordnet sind, daß der jeweilige Hinterschuh (30) in einem Vorbestimmten Abstand hinter den vorderen Führungsmitteln (28) gehalten ist und daß alle Hebemittel (42) ein Paar von semi-flexiblen Streifenelementen (44, 46) umfassen, von denen ein jedes ein Ende aufweist, das an der Unterseite der Platte (20) gesichert ist und ein anderes Ende, das in einen entsprechenden sich längs erstreckenden Kanal (50, 51) ragt, der im hinteren Schuh (30) ausgeformt ist, wobei sich einer der Kanäle (51) nach vorne, der andere (50) nach hinten erstreckt, wobei das Ende des Streifenelementes (44) im nach hinten sich erstreckenden Kanal (50) mit den Antriebsmitteln (60) verbunden ist und die Flexibilität des Streifenelementes (44, 46) derart gewählt ist, daß dann, wenn die Antriebsmittel (60) eine Vorwärtsbewegung eines jeden sich nach hinten erstreckenden Streifenelementes (44) bewirken und dabei die Hinterschuhe (30) gegen eine Vorwärtsbewegung gehalten sind, beide Streifenelemente (44, 46) der beiden hinteren Führungsmittel (30) nach oben aus ihrem entsprechenden Kanal (26) herauswandern und dadurch den hinteren Rand der Dachplatte (20) anheben.

2. Schiebedachanordnung nach Anspruch 1, dadurch gekennzeichnet, daß die Streifenelemente (44, 46) der hinteren Führungsmittel als einstückige Kunststoffgußteile ausgebildet sind.

3. Schiebedachanordnung nach einem der Ansprüche 1 oder 2, gekennzeichnet durch Mittel (84, 122) zum Verhindern einer Bewegung des Hinteren Schuhs (30), wenn die Dachplatte (20) über ihre unterste Position angehoben wird und durch Mittel (85) zum Verhindern eines Nachobenwanderns der Dachplatte (20) aus ihrer untersten Position, wenn die hinteren Schuhe (30) hinter ihrer vordersten Position stehen.

4. Schiedebachanordnung nach Apspruch 3, dadurch gekennzeichnet, daß die Mittel zur Verbindung einer Bewegung des hinteren Schuhs (30) und die Dachplatte (20) jeweils Klauenenden (84, 88) einer Klaue (80) umfassen, die schwenkbar am hinteren Schuh (30) derart angebracht ist, daß sie mit einer Öffnung in einem der Streifenelemente (44, 46) in Eingriff gelangt, wenn sie sich in einer ersten Position befindet und die in einer zweiten Position mit einer Öffnung in der Schiene (26) in Eingriff gelangt.

5. Dachanordnung nach einem der vorhergehenden Ansprüche, dadurch gekennzeichnet, daß die Antriebsmittel ein Kunststoffband (60) für jede Führungsschiene (26) umfassen, wobei jedes Führungsband eine Reihe von rechteckigen Schlitzen über seine gesamte Länge trägt und jedes der nach hinten sich erstreckenden Streifenelemente (44) mit Vorsprüngen (54, 56, 58) versehen ist, die in Eingriff mit entsprechenden Schlitzen beim Ende eines jeden Bandes (60) gelangen können.

6. Dachanordnung nach Anspruch 3, dadurch gekennzeichnet, daß die Mittel zur Verbinderung einer Bewegung des hinteren Schuhs bei angehobener Dachplatte (20) eine hakenähnliche Anordnung (122) umfassen, die vom Vorderschuh (116) getragen und derart angeordnet ist, daß sie in Eingriff mit einem Glied (108) gelangen kann, das an der Spur (110) befestigt ist, wobei die wechselseitige Eingriffsfläche der Anordnung (122) und des Gliedes (108) derart angeordnet ist, daß die Anordnung (122) nur dann außer Eingriff gelangen kann, wenn der hintere Rand der Dachplatte (20) in der vollständig abgesenkten Position ist.

7. Dachanordnung nach Anspruch 6, dadurch gekennzeichnet, daß das Glied (108) an der Schiene (110) über Montagemittel befestigt ist, welche eine Justierung seiner Position entlang der Schiene und seine Höhe hierzu gestatten, um eine Einstellung der Höhe und Längsposition der Vorderkante der Dachplatte (20) zu gestatten, wenn diese sich in der geschlossenen Position befindet.

8. Dachanordnung nach einem der Ansprüche 6 oder 8, dadurch gekennzeichnet, daß das Hinterende eines jeden Hinterschuhs (128) mit einem entsprechenden Kopplungsglied (124) verbunden ist und zwar über Mittel, welche eine Justierung der Relativpositionen erlaubt, daß das Hinterende des nach hinten sich erstreckenden Streifens (44) zwei voneinander beabstandete Rücksprünge (136 und 138) an einer Fläche und einen Vorsprung (134) an der gegenüberliegenden Fläche aufweist, der mit der Projektion der Grenzlinie zwischen den Rücksprüngen (136 und 138) fluchtet, und daß die Antriebsmittel (60) einen Vorsprung (142) aufweisen, der mit einem der Rücksprünge (136 und 138) in Eingriff derart bringbar ist, daß er in Wirkverbindung mit dem Streifenelement (44) steht, aber zwischen den zwei Rücksprüngen (136 und 138) bewegbar nur dann ist, wenn der Vorsprung (134) in einem Rücksprung (130) im Kopplungsglied (124) aufgenommen ist, wobei der Rücksprung (130) dadurch eine Position des Streifenelementes (44) relativ zum Hinterschuh (120) definiert, in der die Antriebsmittel (60) eine begrenzte Bewegung durchführen können, ohne dabei eine äquivalente Bewegung der Dachplatte (20) zu bewirken.

## Revendications

1. Un ensemble de toit ouvrant pour un véhicule automobile comprenant un panneau de toit rigide (20) qui est supporté de chaque côté par des moyens de guidage avant et arrière (28, 30) sur des rails de guidage respectifs (26) s'étendant le long de chaque côté d'une ouverture ménagée dans le toit du véhicule (14) et se prolongeant sous ledit toit (14), derrière ladite ouverture, coopérant avec un moyen d'entraînement (60) actionné sur le moyen de guidage arrière, le moyen de guidage avant (28) étant adapté pour permettre un mouvement de pivotement du panneau autour d'un axe horizontal, perpendiculairement aux rails de guidage (26), chaque moyen de guidage arrière comportant un patin de guidage arrière (30) et un moyen de levage (42), le patin arrière (30) étant logé de façon coulissante dans le rail de guidage correspondant (26), caractérisé en ce que chaque patin arrière (30) est relié au moyen de guidage avant correspondant (28) par des moyens d'entretoisement (68) destinés à retenir ledit patin arrière (30) à une distance prédéterminée derrière le moyen de guidage avant (28) et chaque moyen de levage (42) comprenant une paire de bandes semi-flexibles (44, 46) chacune d'elles présentant une extrémité fixée à la face inférieure du panneau (20) et l'autre extrémité faisant saillie à l'intérieur d'une glissière respective (50, 51) s'étendant longitudinalement formée dans le patin arrière (30) l'une desdites glissières (51) s'étendant vers l'avant et l'autre (50) s'étendant vers l'arrière, l'extrémité de la bande (44) dans la glissière (50) s'étendant vers l'arrière étant reliée à un moyen d'entraînement (60) et la flexibilité des bandes (44, 46) étant telle que, lorsque le moyen d'entraînement (60) assure le déplacement vers l'avant de chaque bande (44) s'étendant vers l'arrière de façon que les patins arrière (30) soient retenus contre tout déplacement vers l'avant, les deux bandes (44, 46) des deux moyens de guidage arrière (30) se déplacent vers le haut à partir de leurs glissières respectives (26), soulevant ainsi le bord arrière du panneau de toit (20).

2. Un ensemble de toit ouvrant selon la revendication 1, caractérisé en ce que les bandes (44, 46) de chaque moyen de guidage arrière réalisées sous forme d'un moulage de matière plastique d'une seule pièce.

3. Un ensemble de toit ouvrant selon l'une quelconque des revendications 1 et 2, caractérisé en ce que des moyens (84, 122) sont prévus pour empêcher le déplacement du patin arrière (30) lorsque le panneau (20) est soulevé au-dessus de sa position la plus basse et des moyens (88) sont prévus pour empêcher le soulèvement du panneau (20) de sa position la plus basse lorsque les patins arrière (30) sont derrière leur position la plus avancée.

4. Un ensemble de toit ouvrant selon la revendication 3, caractérisé en ce que lesdits moyens pour empêcher le déplacement du patin arrière (30) et du panneau (20) comprennent des extrémités respectives (84, 88) d'un cliquet (80) qui est monté pivotant sur le patin arrière (30) de telle sorte qu'elles s'engagent dans une ouverture ménagée dans l'une desdites bandes (44, 46) lorsqu'elles occupent une première position et qu'elles s'engagent dans une ouverture ménagée dans le rail (26) lorsqu'elles occupant une seconde position.

5. Un ensemble de toit selon l'une quelconque des revendications précédentes, caractérisé en ce que le moyen d'entraînement est constitué par une courroie (60) de matière plastique, pour chaque rail de guidage (26), chaque courroie de matière plastique présentant une rangée de fentes rectangulaires ménagées sur sa longueur et chacune des bandes (44) s'étendant vers l'arrière étant munie de saillies (54, 56, 58) pour s'engager dans les fentes correspondantes adjacentes à l'extrémité de chaque courroie (60).

6. Un ensemble de toit selon la revendication 3, caractérisé en ce que le moyen pour empêcher le déplacement du patin arrière lorsque le panneau (20) est soulevé comprend une structure en forme de crochet (122) supportée par le patin avant (116) et destinée à venir en prise sur un élément (108) fixé au rail (110), la surface de contact mutuel de la structure (122) et de l'élément (108) étant disposée de telle sorte que la structure (122) ne puisse être dégagée que lorsque le bord arrière du panneau (20) est en position totalement abaissée.

7. Un ensemble de toit selon la revendication 6, caractérisé en ce que l'élément (108) est fixé au rail (110) par un moyen de montage permettant le réglage de sa position le long du rail et de sa hauteur par rapport à celui-ci de manière à permettre le réglage de la hauteur et de la position longitudinale du bord avant du panneau (20) lorsqu'il est en position fermée.

8. Un ensemble de toit selon l'une quelconque des revendications 6 et 7, caractérisé en ce que l'extrémité arrière de chaque patin arrière (128) est reliée à l'organe d'accouplement respectif (124) par des moyens permettant le réglage de leurs positions relatives, l'extrémité arrière de la bande (44) s'étendant vers l'arrière, présentant deux évidements espacés (136, 138) sur une face et une saillie (142) sur sa face opposée, en alignement avec le pourtour de la saillie entre les évidements (136 et 138), le moyen d'entraînement (60) présentant une saillie (142) qui peut s'engager dans l'un ou l'autre des évidements (136 et 138) de manière à être relié et à entraîner la bande (44) mais ne pouvant se déplacer entre les deux évidements (136 et 138) que lorsque la saillie (134) est logée dans un évidement (130) dans l'organe d'accouplement (124), l'évidement (130) définissant ainsi une position de la bande (44) par rapport au patin arrière (120), dans laquelle le moyen d'entraînement (60) est susceptible d'effecteur un mouvement limité, sans provoquer un mouvement équivalent du panneau (20).

0 106 610

FIG.1.

FIG. 3.

FIG. 7

FIG. 8.

FIG. 9.

FIG. 10.

FIG. 11.